(19) Europäisches Patentamt
European Patent Office
Office européen des brevets

(11) **EP 0 909 426 B1**

(12) **EUROPEAN PATENT SPECIFICATION**

(45) Date of publication and mention
of the grant of the patent:
**07.03.2001   Bulletin 2001/10**

(51) Int Cl.$^7$: **G06K 9/62**

(86) International application number:
**PCT/GB97/01794**

(21) Application number: **97929428.7**

(22) Date of filing: **03.07.1997**

(87) International publication number:
**WO 98/01819 (15.01.1998 Gazette 1998/02)**

(54) **PATTERN RECOGNITION WITH NEURAL NETWORK**

MUSTERERKENNUNG MITTELS NEURONALEN NETZES

RECONNAISSANCE DE FORMES A L'AIDE D'UN RESEAU NEURONAL

(84) Designated Contracting States:
**AT BE CH DE DK ES FI FR GB GR IE IT LI LU MC NL PT SE**

(30) Priority: **05.07.1996   GB 9614192**
**28.08.1996   GB 9617913**

(43) Date of publication of application:
**21.04.1999   Bulletin 1999/16**

(73) Proprietor: **Osmetech PLC**
**Crewe, Cheshire CW1 1WZ (GB)**

(72) Inventors:
• **PERSAUD, Krishna Chandra**
**Cheshire SK8 1NE (GB)**
• **WELLS, Paul J.**
**Huntingdon, Cambridgeshire PE18 6AP (GB)**

(74) Representative: **Lambert, Ian Robert et al**
**McNeight & Lawrence,**
**Regent House,**
**Heaton Lane**
**Stockport, Cheshire SK4 1BS (GB)**

(56) References cited:
• OTT R ET AL: "On feature extraction in character recognition" WISSENSCHAFTLICHE BERICHTE AEG-TELEFUNKEN, 1974, WEST GERMANY, vol. 47, no. 3-4, ISSN 0043-6801, pages 100-110, XP002042963

• SHURMER H V ET AL: "Odour discrimination with an electronic nose" EAST-WEST WORKSHOP ON MICROELECTRONIC SENSORS, SOZOPOL, BULGARIA, 7-9 MAY 1991, vol. B8, no. 1, ISSN 0925-4005, SENSORS AND ACTUATORS B (CHEMICAL), APRIL 1992, SWITZERLAND, pages 1-11, XP002042968 cited in the application

• KELLER J M ET AL: "Target recognition using the Karhunen-Loeve transform" IEEE 1985 PROCEEDINGS OF THE INTERNATIONAL CONFERENCE ON CYBERNETICS AND SOCIETY (CAT. NO.85CH2253-3), TUCSON, AZ, USA, 12-15 NOV. 1985, 1985, NEW YORK, NY, USA, IEEE, USA, pages 310-314, XP002042965

• HYMAN S D: "CLASSIFICATION OF JAPANESE KANJI USING PRINCIPAL COMPONENT ANALYSIS AS A PREPROCESSOR TO AN ARTIFICIAL NEURAL NETWORK" PROCEEDINGS OF THE INTERNATIONAL JOINT CONFERENCE ON NEURAL NETWORK (IJCNN), SEATTLE, JULY 8 - 12, 1991, vol. 1, INSTITUTE OF ELECTRICAL AND ELECTRONICS ENGINEERS, pages 233-238, XP000238298

• SAMMON J W: "A NONLINEAR MAPPING FOR DATA STRUCTURE ANALYSIS" IEEE TRANSACTIONS ON COMPUTERS, vol. 18, no. 5, pages 401-409, XP000615656 cited in the application

• HYUNG GI BYUN ET AL: "Application of unsupervised clustering methods to the assessment of malodour in agriculture using an array of conducting polymer odour sensors" COMPUTERS AND ELECTRONICS IN AGRICULTURE, MAY 1997, ELSEVIER, NETHERLANDS, vol. 17, no. 2, ISSN 0168-1699, pages 233-247, XP002042966

**Description**

This invention relates to pattern recognition, in particular to a method and apparatus for standardising patterns that are subject to extraneous variations in their form.

A now well established approach in the field of gas sensing is to employ an array of gas sensors for gas detection and identification purposes. Such an array may, for example, comprise a plurality of semiconducting organic polymer (SOP) based gas sensing elements (see, for example, Hatfield J.V., Neaves P., Hicks P.J., Persaud K. and Travers P., Sensors and Actuators B, 18-19 (1994) 221 and references therein) Each gas sensing element comprises a different SOP, the SOPs being selected to exhibit broad and overlapping sensitivities to a range of gases. In this manner a single device may be used to detect and identify a large number of gases, a gas being recognised by the characteristic pattern (or "molecular fingerprint") of response across the sensor array.

However, recognition is hampered by measurement to measurement variations caused by factors such as temperature, humidity and sensor ageing effects. Furthermore, variations in manufacturing conditions result in variations in the precise form of a fingerprint from sensor array to sensor array. It would be highly desirable to eliminate, or substantially reduce, the effect of such variations for a number of reasons. Firstly, the reliability of pattern recognition - and hence gas identification - would be increased. Secondly, the response fingerprint corresponding to a measurement of a known gas could be regarded as a universal standard for all arrays of that type, or, indeed, of other types. Thirdly, the need for recalibration would be eliminated or reduced.

The number of gas sensors used in such arrays is quite large - typically twenty or more - and, therefore, the output pattern of response is essentially a position in multi-dimensional space. It has been found that visual comparison of patterns and pattern groups is greatly enhanced by mapping data from the multi-dimensional space of the raw patterns to two or three dimensional space. Non-linear or linear orthogonal transformations such as Principal Component Analysis (PCA) may be applied (see, for example, Gardner JW and Shurmer HV, Sensors and Actuators B 4 (1991) 109, Kohonen T, Self Organisation and Associate Memory, New York, Springer-Verlag, 1989, 3rd Edition, and Joliffe IT, Principal Component Analysis, New York, Springer-Verlag, 1986). Comparisons of patterns are facilitated by the mapping, since humans are extremely proficient at recognising relationships in two or three dimensional space. However, such transformations do not, in themselves, ameliorate the problems, described above, of variations in sensor response: any scatter present in the raw data may propagate through into scatter in the transformed data.

Multilayer artificial neural networks are commonly used for supervised training problems where input patterns are required to be placed into user defined classes. Such networks consist of sets of processing elements known as neurons or nodes that are arranged into two or more layers. One layer is always an input layer, comprising neurons whose outputs are defined by the input pattern presented, and another layer is always an output layer. Usually there is at least one "hidden" layer of neurons sandwiched between the input and output layers, and the network is a "feedforward" one where information flows in one direction only. Normally inputs to neurons in each layer originate exclusively from the outputs of neurons in the previous layer.

The output of a given neuron in the network is a function of the inputs into the neuron. More specifically, a neuron has n inputs, labelled 0 to n-1, together with an assumed input, called the bias, which is always equal to 1.0. The neuron is characterised by n+1 weights which multiply the inputs and an activation function that is applied to the sum of the weighted inputs in order to produce the output of the neuron. The sum of weighted inputs including the bias is known as the net input, thus the output O of the neuron from a set of n inputs $x_i$ (i = 0,....., n-1) can be derived from equation 1:

$$O = f(net) = f\left( \sum_{i=0}^{n-1} x_i w_i + w_n \right) \qquad (1)$$

where net is the net input, f( ) is the activation function and $w_n$ is the bias weighting.

The operational characteristics of the neuron are primarily controlled by the weights. The activation function is typically a non-linear function, often some sort of threshold function, that, when applied to the net input of a neuron. determines the output of that neuron. Sigmoid functions are often employed.

The ability to place an input pattern into user defined classes is a frequently exploited attribute of neural networks. Indeed, neural networks have been extensively employed in the field of gas sensors for pattern recognition purposes.

Document EP-A-0834137 discloses the use of a trained neural network to correct for measurement drift in an analytical instrument, principally, in the mass/charge peaks associated with mass spectrometers. This document does not disclose the use of such methods for standardising patterns associated with arrays if gas sensors.

In document OTT R ET Al: "On feature extraction in character recognition" WISSENSCHAFTLICHE BERICHTE AEG-TELEFUNKEN, 1974, WEST GERMANY, vol. 47, no. 3-4, pages 220-222, feature selection is disclosed using a principal component analysis; the system is intended to equate a given input pattern with a character.

Document HYMAN S D: "CLASSIFICATION OF JAPANESE KANJI USING PRINCIPAL COMPONENT ANALYSIS AS A PREPROCESSOR TO AN ARTIFICIAL NEURAL NETWORK" PROCEEDINGS OF THE INTERNATIONAL JOINT CONFERENCE ON NEURAL NETWORKS (IJCNN), SEATTLE, JULY 8-12, 991, vol. 1, INSTITUTE OF ELECTRICAL AND ELECTRONICS ENGINEERS discloses the use of a neural network in a conventional manner, i.e., an input pattern is presented to the neural network which fires a single output node corresponding to the Kanji character closest to the input pattern.

The present invention involves the use of a neural network as a means of standardising the outputs of a sensor array as a precursor step to pattern recognition. The present invention involves the use of a modified mapping algorithm as a means of standardising the outputs of a sensor array. These approaches substantially eliminate variations of the type described above. Indeed, it is understood that "standardisation" in the present context is intended to describe a process that substantially eliminates variations of the general type described above, whilst retaining the separations between patterns of inherently different type. "Standardisation means" is understood to comprise the physical means by which such standardisation is performed, wherein "raw" data is input to the standardisation means and standardised data -of reduced dimensionality- is outputted.

It is understood that the invention is not limited to the standardisation of gas sensor outputs; rather, it can be applied to any form of pattern standardisation. Furthermore, it is understood that the term 'gas' embraces all gaseous species, including, for example, volatile components of a liquid.

According to the invention methods for standardising an input pattern is set out in claim 1 of the sets for ES, GR, IE, IT, LU, MC and PT, and for AT, BE, CH, DE, DK, FI, FR, GB, LI, NL and SE respectively.

The input pattern may comprise the response of an array of gas sensors or quantities related thereto. The response may be normalised before being inputted to the neural network, or mapped to a space of reduced dimensionality.

The number of gas sensors in the array may be twenty or greater.

The reference patterns may comprise the responses of at least one reference array of gas sensors to a number of different gases.

A constant offset may be subtracted from the responses of the gas sensors. By employing this procedure, greater separation is achieved between patterns in which the individual gas sensors respond in substantially identical fashion to one another.

Quantities related to one or more members of the group comprising temperature; humidity; sensor age; and sensor base resistance may also be inputs to a neural network.

Embodiments of method in accordance with the invention will now be described with reference to the accompanying drawings, in which:-

| | |
|---|---|
| Figure 1 | is a schematic diagram of a neural network; |
| Figure 2 | is a Sammon map of unstandardised and standardised raw data of array A, the standardisation being to the average patterns of array A; |
| Figure 3 | is as Figure 2, except that normalised data is used; |
| Figure 4 | is a Sammon map of unstandardised and standardised normalised data of array D, the standardisation being to the average patterns of array D; |
| Figure 5 | is a Sammon map of unstandardised and standardised normalised data of array B, the standardisation being to the average patterns of arrays A, B, C and D; |
| Figure 6 | is a Sammon map of raw unstandardised data of arrays A and C; |
| Figure 7 | is a Sammon map of unstandardised and standardised raw data of array D, the standardisation being to raw data of array C; |
| Figure 8 | is a Sammon map of unstandardised raw data resulting from exposure of a sensor array to butyl acetate and ethyl acetate vapour, seventeen measurements being made over a 55 day period; |
| Figure 9 | is a Sammon map of a subset of the unstandardised and standardised raw data of Figure 8, the |

standardisation being to the originally obtained patterns.

Figure 10        is (a) a Sammon map of unstandardised data and (b) a Sammon map of standardised data, the data in both cases having a constant value subtracted therefrom;

Figure 11        is a two dimensional PCA plot with seven calibrants and P=4;

Figure 12        is a two dimensional PCA plot with one calibrant, six unknowns and P=3;

Figure 13        is a two dimensional PCA plot with two calibrants, five unknowns and P=3;

Figure 14        is a two dimensional PCA plot with four calibrants, three unknowns and P=3;

Figure 15        is a two dimensional PCA plot with seven calibrants and P=3;

and Figure 16        is an expanded portion of Figure 14 showing the mapping of the three unknowns.

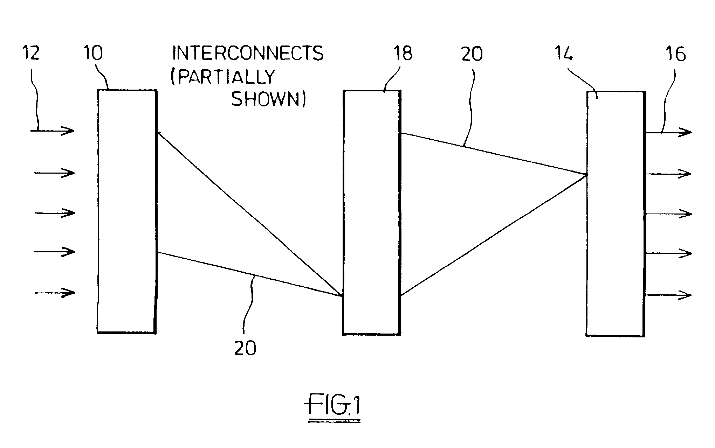

The invention comprises methods for standardising an input pattern. Figure 1 shows a pattern standardising neural network comprising a plurality of input nodes 10 into which an input pattern 12 is inputted; and a plurality of output nodes 14 from which a standardised pattern 16 is output; wherein the neural network is previously trained to perform the standardisation.

The training comprises a series of training steps in which a training pattern is inputted to the neural network and the output pattern is constrained as a reference pattern.

The neural network is a three layer feed forward neural network in which, necessarily, the number of input nodes and the number of output nodes are greater than or equal to the number of components of the input pattern (thirty two in the examples described below). Figure 1 shows the input layer 10, hidden layer 18 and output layer 14, but for reasons of presentational simplicity Figure 1 only shows a subset of the layer interconnects 20. It should be noted that whilst neural networks of this description have proved successful in the present application, other architectures, such as a Parzen network or a radial basis function network, are also within the scope of the invention. Training was performed using the error back-propagation method, although other training algorithms, such as the Stochastic algorithm, may also be used for this purpose. It was demonstrated that substantially identical results are obtained in the cases where 8, 16 and 32 hidden nodes are employed.

The input pattern in the following examples comprises the response of an array of gas sensors or quantities related thereto, although the teachings contained therein may be transferred to other pattern recognition applications. The arrays of gas sensors employed in these examples comprise a plurality of SOP based sensors, and the response of an array comprises the changes in dc resistance of the individual gas sensors measured on exposure of the array to a gas (see Hatfield *et al*, ibid).

The patterns - both input and standardised output patterns - are, in the present examples, reduced to two dimensions by a Sammon mapping technique (see, for example, Sammon Jr J.W. IEEE Trans on Computers 5 c-18 (1969) 401). This is a non-linear orthogonal transformation from the multi-dimensional space of the patterns to two dimensional space which greatly assists in visual comparison of patterns.

### Example 1

Four arrays of 32 SOP sensors were employed, labelled henceforth as arrays A, B, C and D. Each array comprised a different combination of SOP sensors. Each array was exposed to vapour from five solvents : butanone, ethyl acetate, ethanol/water, propanol and toluene. Measurements were made with each solvent at seven different solvent vapour concentrations in air; Table 1 shows the % volume concentrations employed for all five solvents. For simplicity, the variable concentration measurements are described in Table 1 by a "measurement number" between 1 and 7 : these measurement numbers will be used henceforth instead of the concentration value.

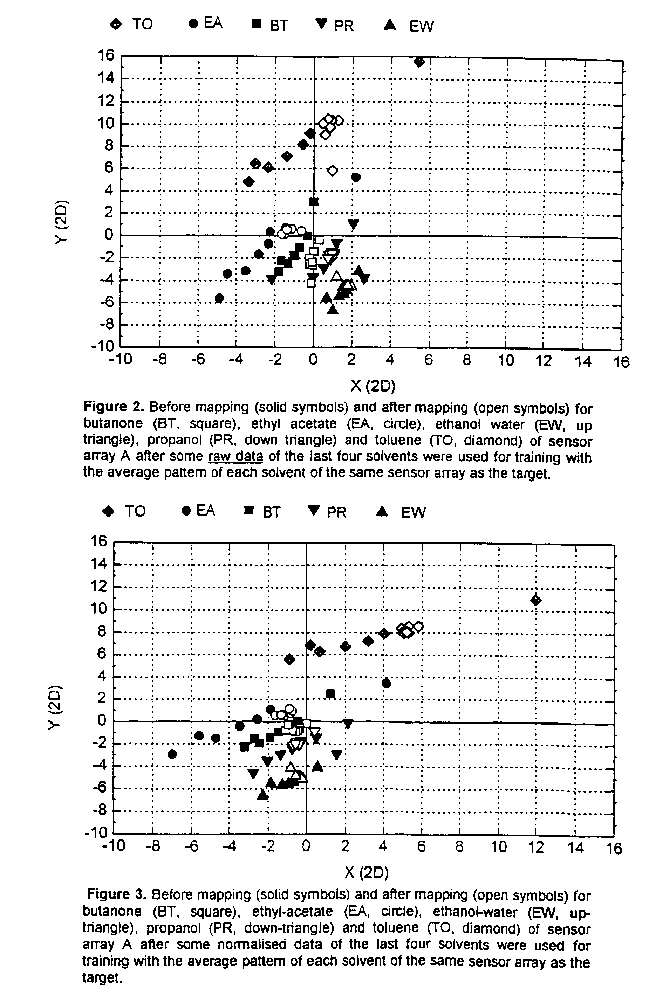

The neural network was trained to perform the standardisation by using raw data (i.e. measured dc resistance changes) from array A corresponding to measurement numbers 1, 3 5 and 6 for solvents ethyl acetate, ethanol/water, propanol and toluene. The training consists of a series of training "steps" in which a training pattern corresponding one of these to measurement numbers is inputted to the neural network and the output pattern is constrained to be a reference pattern. The reference pattern is the **average** pattern for the particular solvent with array A. In other words, the raw data for a particular solvent is standardised to the average pattern for that solvent. After training, the neural network was used to alter the patterns corresponding to all of the raw data. Sammon mapping was performed on the inputted and outputted patterns : the results are shown in Figure 2. With the solvents ethyl acetate, ethanol/water, propanol and toluene the standardised data points cluster very tightly around the target, average value, with the exception of one toluene measurement (which was not used as a training pattern). In comparison, the unstandardised raw data show large degrees of scatter. However, the results for butanone, which was excluded from the training step. are less satisfactory. The scattering observed with unstandardised data is likely due to variations in measurement conditions and to small concentration dependent variations in the response pattern.

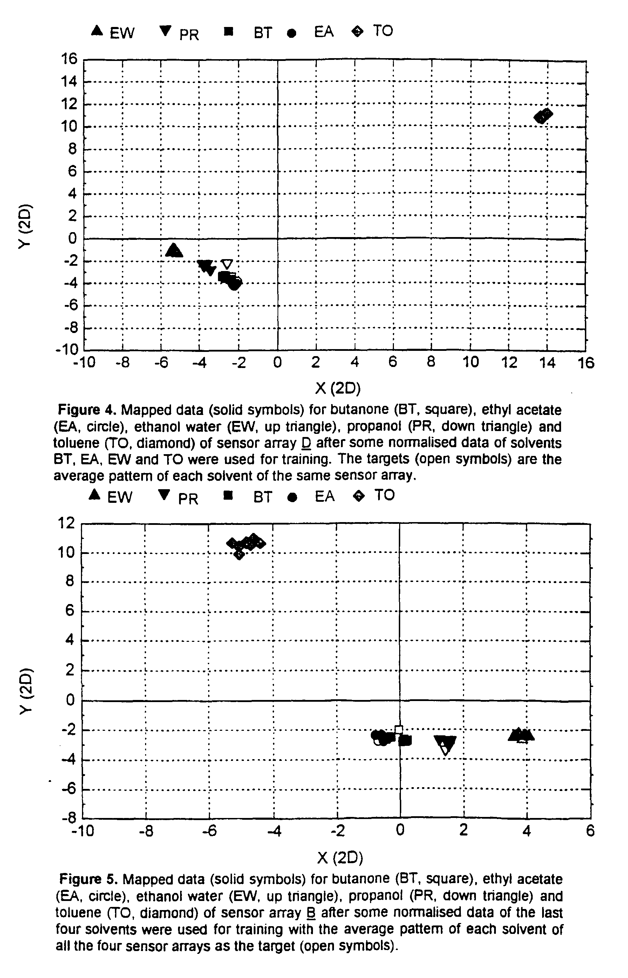

The use of normalised data rather than 'raw' data was investigated. The normalisation was accomplished by expressing each individual gas sensor resistance change as a percentage of the total resistance changes across the array. The same data sets were used for training as previously, and the reference patterns once again were the average patterns of the (now normalised) data for solvents ethyl acetate, ethanol/water, propanol and toluene. The results are shown in Figure 3 and reveal a significant improvement in the clustering of the butanone data. Thus the use of normalised data appears to facilitate excellent standardisation, even of data corresponding to a gas or solvent hitherto unknown to the neural network. Furthermore, normalised data has advantages with regard to convergence. Similar results were obtained with sensor arrays B, C and D using measurement numbers 1, 4 6 and 7 of the same four solvents for training. For example, Figure 4 shows the standardised data generated from normalised patterns obtained with array D. Extremely tight data clustering is observed : although it is not apparent from Figure 4, each cluster corresponding to a different solvent consists of seven different patterns themselves corresponding to measurement numbers 1 to 7.

## Example 2

The normalised data as described in Example 1 were again used, the patterns for each sensor array A to D being standardised to the **average** solvent pattern across **all** of the four arrays. Normalised data corresponding to measurement numbers 1, 4, 6 and 7 of solvents ethyl acetate, ethanol/water, propanol and toluene were selected for training, thus excluding butanone measurements from the training step. The reference patterns were the corresponding average patterns for the solvent in question, averaged over all measurement numbers and all of the arrays A to D.

The results for the standardisation of array B are shown in Figure 5, the reference. averaged patterns being depicted by open symbols. Excellent clustering is demonstrated, even with the hitherto unseen butanone data. Very similar clustering was observed with the standardised data of arrays A, C and D. These results indicate that pattern variations caused by differences in the response characteristics of different arrays can be substantially eliminated by standardising to an average array pattern. This may be achieved even if the arrays in question consist of different SOP combinations.

## Example 3

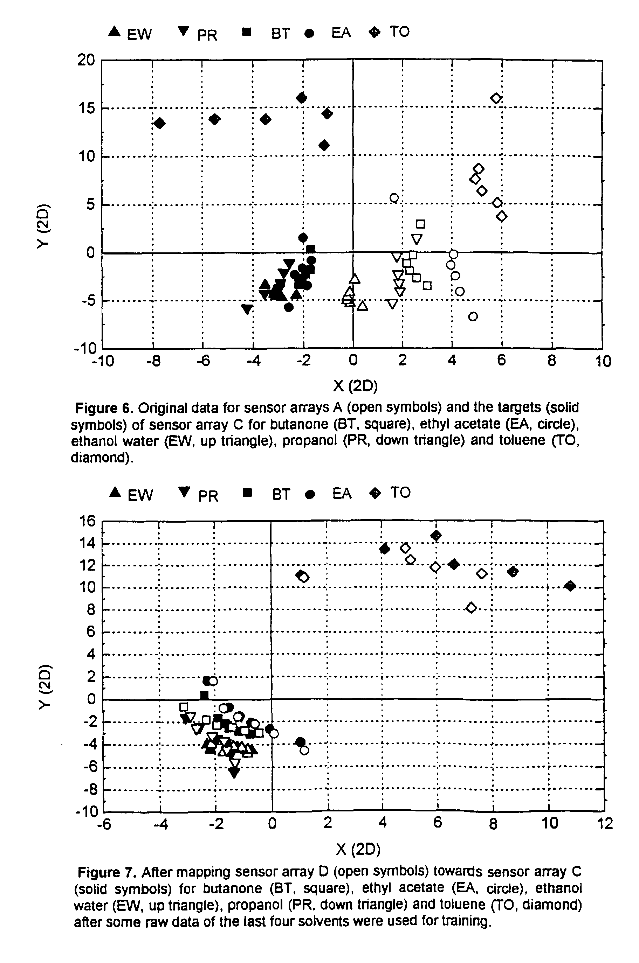

The normalised data described in Example 1 were used. In this example, data corresponding to measurements made with arrays A, B and D were standardised to the response of array C. This transformation was achieved even though different arrays comprise different SOP combinations and therefore possess different inherent response profiles, as revealed in Figure 6, which shows the original data of arrays A and C.

Raw, unnormalised data corresponding to measurement numbers 1, 3, 5 and 6 of ethyl acetate, ethanol/water, propanol and toluene for arrays A, B and D were used as training patterns with the corresponding data of array C used as reference patterns. After training, all patterns of arrays A, B and D were standardised to the response of array C. The results for array D are shown in Figure 7. Results of similar quality were obtained with the data from arrays A and B. Figure 7 demonstrates that data from one sensor array can be mapped onto or very close to corresponding data of another, physically distinct, array, even for solvents which were not previously presented to the network during training.

## Example 4

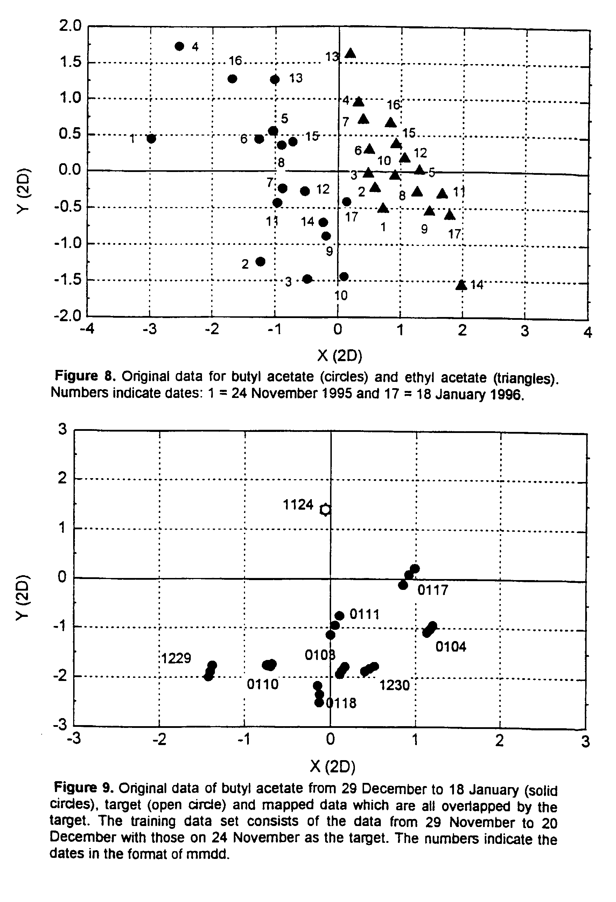

Standardisation of a series of measurements made with an array of sensors over a period of time was performed. Seventeen measurements of butyl acetate and ethyl acetate vapour were made with a SOP based 32 sensor array over a period of 55 days, each measurement being repeated three or four times. Figure 8 shows the Sammon map of the raw data, indicating that a large degree of scatter is present. The numerals denote the measurement number of the data. The scatter is due to day to day variations in conditions such as humidity, temperature and operating errors, these variations likely being random ones. As such, conventional statistical methods would not be suitable to correct for these random variations. Additionally, it is known that the base resistance of a SOP sensor increases as a function of time and that this variations in base resistance leads to a - probably systematic - variation in sensor response as a function of time.

Training was performed using raw data from the first nine measurements of butyl acetate and the first seven measurements of ethyl acetate as training patterns. The corresponding data obtained on the first measurement day were used as reference patterns. The remaining data sets (eight measurements for butyl acetate. ten measurements for ethyl acetate) were standardised, results for butyl acetate being shown in Figure 9 together with the rather scattered unstandardised data. The unstandardised pattern (solid circles) and the reference pattern (open circle) are labelled by the date on which the measurement was made, in the format of mmdd. The standardised patterns are, in fact, virtually completely overlapped by the reference pattern, indicating the extremely high accuracy and reproducibility of the method.

**Example 5**

Some gaseous samples induce very similar responses from the sensors in the array. In the present example, it was found that three different apple odours produced responses of about 3% in all thirty two sensors in an array. (A response of 3% corresponds to a 3% change in the basal dc resistance of the sensor). Therefore, the variance within each pattern is very small, with the consequence that the patterns corresponding to different apple samples are very similar to each other.

However, by subtracting a constant offset from the responses of all of the sensors, the variance of each pattern and hence the difference between patterns is magnified. Thus, prior to further processing, a constant offset corresponding to 80% of the minimum pattern response value was subtracted from the response of each senor. Training was performed using raw data from measurements of strawberry, two apple ("apple 1" and "apple 2"), ethyl acetate, ethanol-water and lime odours as training patterns. The measurements were made over five days, with four repeat measurements per odour being performed per day. The reference patterns were the average patterns over all five days for strawberry, ethyl acetate and lime, and the average patterns from the fourth and fifth days for apple 1 and apple 2, respectively. The third apple odour ("apple 3") was not presented to the neural network. The neural network was trained until the average error was <u>ca</u>. 0.5%, and then the entire data base was standardised.

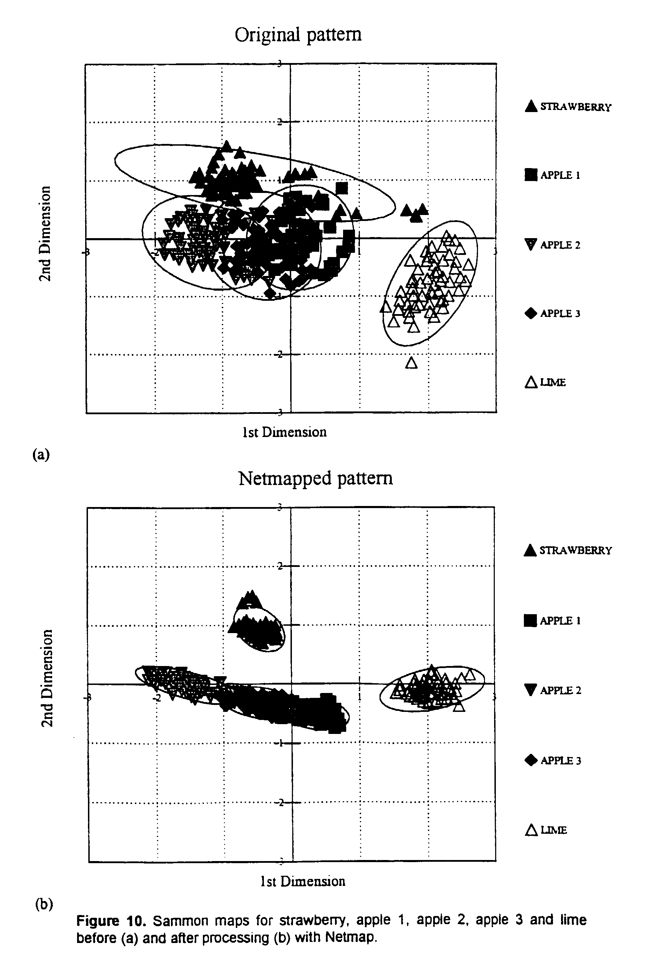

Figures 10 (a) and (b) shows Sammon maps of the strawberry. lime, and three apple odours before and after standardisation. The unstandardised clusters are rather scattered, the effect of standardisation being to greatly tighten the clustering, even for the apple 3 odour which was unknown to the network. Although not shown in Figure 10, similar effects were observed with ethyl acetate and ethanol - water. Without standardisation, it is seen that two days of strawberry data are very close to apple 1, whilst another day of strawberry data are close to lime. After standardisation, these data are resolved into a distinct strawberry cluster.

The overall classification accuracy was only 87.2% for the unstandardised data, a figure which was improved to 96.7% after standardisation. With the strawberry data, an unstandardised data classification accuracy of 78 % was obtained, whereas an accuracy of 100% was obtained with the standardised data. For the three apple odours, the classification accuracy increased from 88.0% to 95.4%, when standardisation was performed.

It should be noted that the constant value subtracted from the sensor responses can be calculated in different ways. Thus, for example, the above described procedure was repeated by subtracting from each sensor response: (i) the mean sensor response across the pattern and (ii) 50% of this mean sensor response. No significant differences were noted using these approaches, compared to the approach of subtracting 80% the minimum response in the pattern. The latter approach is convenient because the residual responses are always positive.

It may prove desirable to input, in addition to the input pattern, further information into the neural network during training and standardisation phases. This additional information could be related to the humidity, temperature, sensor age or sensor base resistance value, or combinations thereof. The standardisation need not be of the raw input pattern; rather, it may be desirable to reduce the pattern to two or three dimensional space before performing a standardisation of the transformed data.

The methods according to the present invention are directed towards modified data mapping algorithms which reduce an input pattern to lower dimensional space. The modifications provided by the present invention permit pattern standardisation to be performed in tandem with the mapping process. The method comprises two phases : training the standardisation means to perform the standardisation and then mapping and standardising "raw" input data.

The training comprises :

mapping a plurality of reference patterns onto a space of reduced dimensionality, preferably between one and five; inputting a plurality of training patterns to said standardisation means, each training pattern being of a type corresponding to a reference pattern, and mapping said training patterns to a space of reduced dimensionality equal to the dimensionality of the reduced reference patterns; and performing a standardising transformation on the reduced dimensionality training patterns so as to substantially map said training patterns onto the reduced dimensionality reference patterns.

The input pattern is mapped onto a space of reduced dimensionality equal to the dimensionality of the mapped reference patterns and the standardising transformation applied to the thus reduced input pattern to produce a standardised pattern of reduced dimensionality.

Mapping into a space of reduced dimensionality may be accomplished using a linear mapping algorithm, which may be the principal components analysis (PCA) algorithm, or a variant thereof. However, it should be noted that the use of non-linear algorithms is also within the scope of the invention.

The standardising transformation may be performed by a multiple linear regression algorithm, as described in more detail below.

Alternatively, the standardising transformation may be performed by a multiple non-linear regression algorithm, or by a restricted mathematical transformation. The advantage of the former is that it is more able to cope with any non-linearities present in the data, although the amount of calibrant data required for effective mapping is increased. A "restricted mathematical transformation" is understood to comprise a relatively simple mathematical function, such as a rotation, or possibly a combination of functions. Another possibility is to employ a neural network for this purpose.

The input and training patterns may comprise the responses of an array of gas sensors or quantities related thereto. The responses may be normalised before mapping to the space of reduced dimensionality. The mapping and standardisation of the responses of such gas sensor arrays - which typically comprise at least twenty individual gas sensing elements - may be considered a primary purpose of the present invention. However, the scope of the invention encompasses the standardisation of input patterns generally.

The reference pattern may comprise the responses of at least one reference array of gas sensors to a number of different gases. In other words, the response of a gas sensing array may be standardised against a physically distinct, reference array. This procedure substantially eliminates variations in response from array to array caused by variations in manufacturing conditions.

**Standardisation of Gas Sensor Array Responses Using a Modified PCA Algorithm.**

1. Summary of the Algorithm

a) Generation of a reference PCA map using a set of calibrants which provide the reference patterns. The number of calibrants should be sufficient to span the device space.

b) Projection of raw, training data (of N calibrants) common to the reference map using the reference map PCA loading vectors.

c) Use of multiple linear regression to optimise the mapping of the PCA scores of the training patterns to the PCA scores of the corresponding reference pattern. This standardising transformation takes place in a reduced PCA space of sufficient dimensionality (P) to span the PCA scores in the original reference map.
In effect, the standardising transformation "distorts" the training data, in the simplest possible manner, to make it agree with the original reference PCA map. The distortion includes rotations, shearing and stretching in P dimensional space.

d) Projection of raw, input patterns of unknown, non-calibrant data using the reference map PCA loading vectors followed by transformation using the standardising transformation.

The multiple linear regression transformation is, in general, a Px (P+1) matrix having, by definition, Px(P+1) degrees of freedom. If N calibrants, producing N training patterns are used, then NP pieces of information will be generated. In the case of a general linear mapping:

$$NP \geq P \times (P+1) \; ; \; N \geq P+1$$

P is preferably between 2 and 4 (depending on the nature of the reference PCA map) so $N_{min}$ is between 3 and 5. This is an acceptable number of calibrant species to run through a gas sensor array device. It may be possible to reduce this number still further if response drift occurs in such a fashion that there are additional constraints between the transformation matrix.

## 2. Mapping of Training and Input Patterns

### 2.1 Treatment of Reference Patterns

a) Define $D_{ij}^{R}$ as the $j^{th}$ measurement value of the $i^{th}$ reference pattern. i runs from 1 to N where N is the number of reference patterns ; j runs from 1 to 32 which, in this example, corresponds to the number of sensors in the array.

b) Normalise $D_{j}^{Ri}$ - this step is optional and may be replaced by a user- defined normalisation.

    i) means subtraction

$$D_{ij}^{R} = D_{ij}^{R} - \left( \Sigma(j) \; D_{ij}^{R} / 32 \right)$$

    ii) calculate rms of mean subtracted row values (each row corresponding to a different reference pattern

$$rms_{i} = \left( \Sigma(j) D_{ij}^{R2} / 32 \right)^{0.5}$$

    iii) divide each value of the mean-subtracted $D_{ij}^{R}$ by rms value for that row:

$$D_{ij}^{R} = D_{ij}^{R} / rms_{i}$$

c) Centre columns (columns corresponding to the value of a given sensor over the i reference patterns):

$$D_{ij}^{R} = D_{ij}^{R} - \left( \Sigma(i) \; D_{ij}^{R} / N \right)$$

d) Perform PCA

### 2.2 Treatment of Training and Input Patterns

a) Form a "master" PCA map of reference data. The map comprises PCA "scores" (values of the PCA co-ordinates of a pattern); column means and loading vectors (eigenvectors corresponding to the principal components).

b) Treat training patterns $D_{ij}^{T}$ by:

    i) mean subtract and divide by rms as in Sect. 2.1 .b) to generate new $D_{ij}^{T}$ .

    ii) subtract master map column means from each $D_{ij}^{T}$ (equivalent to Sect. 2.1c).

c) Replay each row in $D_{ij}^{T}$ (each corresponding to a training pattern) through the master map by forming the dot product of each row with the normalised master map loading vector ($r_{jk}'$) for each PCA vector k, thereby generating a training pattern score :

$$N_{ik} = \Sigma(j) \; D_{ij}^{T} \cdot r_{jk}'$$

where $N_{ik}$ is the new score ( pattern i, PCA component k ), j runs from 1 to 32, and $r'_{jk}$ represents the $j^{th}$ component of the $k^{th}$ PCA component loading vector.
Two sets of scores - from the master map and from "replaying" training data through the master map - are now generated in P PCA components where P is set by truncating the PCA expansion.

    d) The standardising transformation - a geometrical mapping - is determined by multiple linear regression of the new training scores $N_{ik}$ onto the master scores $L_{ik}$ (k running from 1 to P).

    e) Determine scores for the - possibly unknown - input patterns using steps 2.2 a-c, and then apply the standardising transformation to the scores to determine standardised, mapped scores.

3. <u>Results</u>

Data were obtained on two different days using a thirty two sensor gas sensing array. Vapour from seven liquids was used, namely ethanol, 1-propanol, 1-butanol, toluene, 2-propanol, 1-pentanol and ethyl benzene. Samples were dried with a molecular sieve and run with dry nitrogen. Three measurements of each vapour were made on each day.

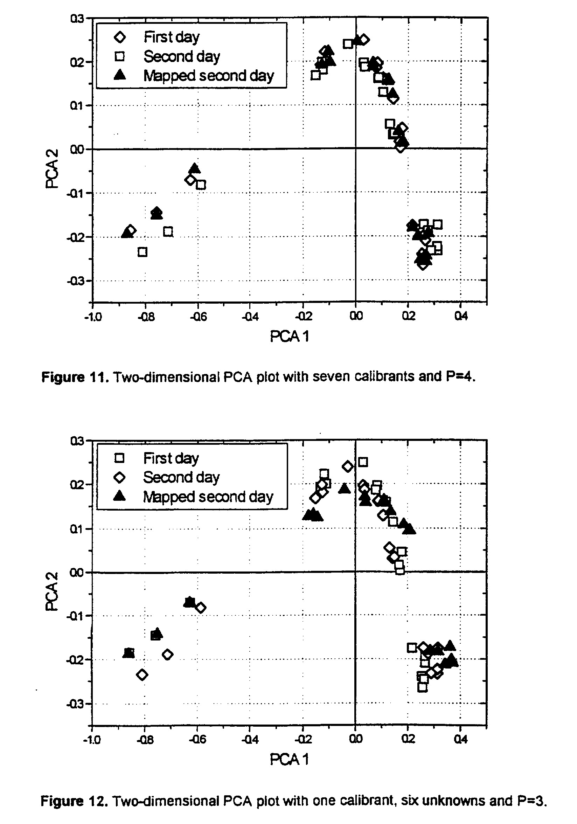

    a) All of the first day data (a total of twenty one measurements) were used as reference patterns. The dimensionality P was set to four. Data taken on the second day were standardised against first day data. The results are shown in Figure 11, which is a two dimensional plot using the two largest principal components. In all of the Figures 11 to 16, solid circles denote first day data, crosses denote unstandardised second day data and open circles denote standardised second day data. Figure 11 shows that there is a not inconsiderable day to day variation in "raw" response patterns which is virtually eliminated by the standardising algorithm.

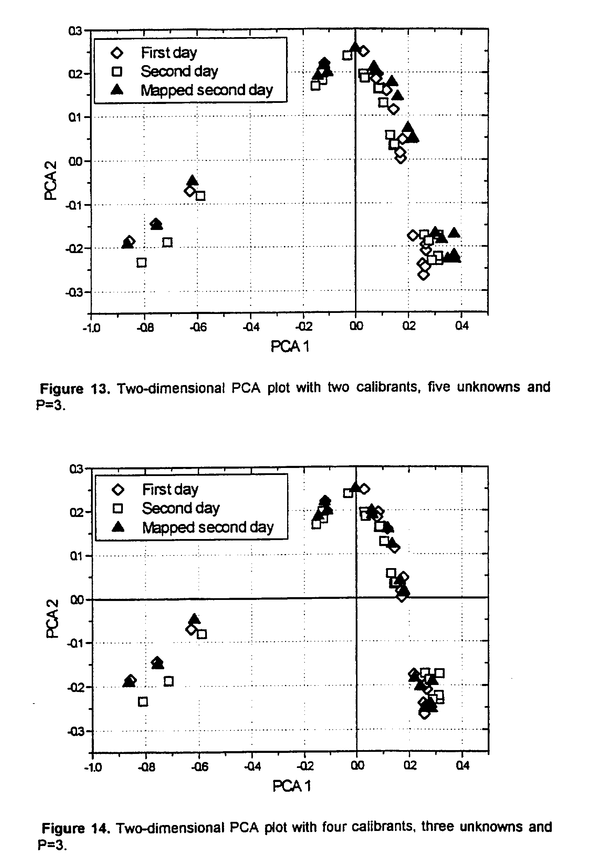

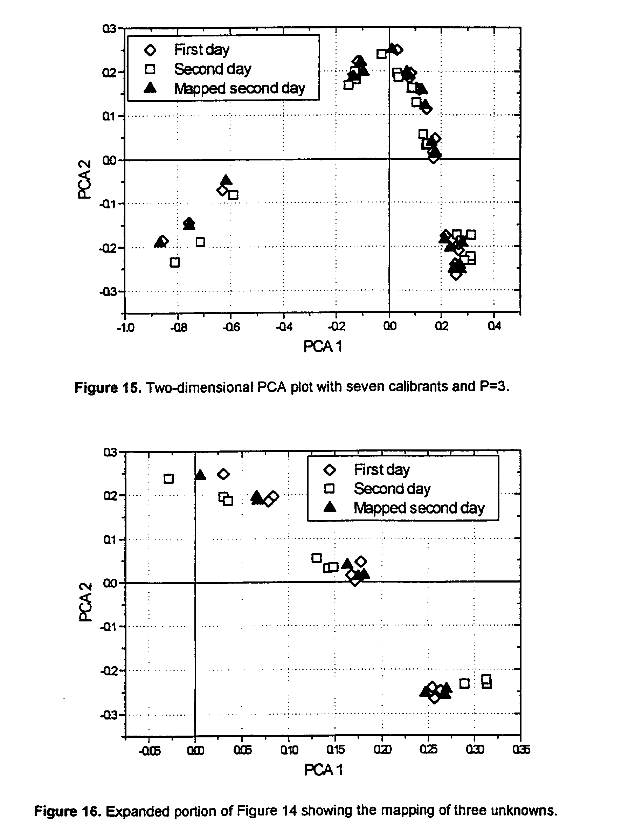

    b) The mapping and the standardising transformation were performed with P equal to 3. Figures 12 to 16 show the results of varying the number of reference and training patterns used for defining the standardising transformation. In Figure 12 only one vapour is used as a calibrant, providing three reference and training patterns because of the repeat measurements. Therefore, the other six vapours are "unknowns". Figure 13 shows the result of using two calibrants for the reference and training patterns (five unknowns). Similarly, Figure 14 shows the result of using four calibrants (three unknowns) and Figure 15 shows the result of using all seven vapours as calibrants. Figure 16 shows only the mapping of the three unknowns shown in Figure 14. The plots are in two dimensions, once again corresponding the two largest principal components.

Figures 12 to 16 demonstrate that, unsurprisingly, the quality of the standardisation improves as the number of calibrants increased. In particular, variation correction is good for four or greater calibrants, which is not unexpected since when P=3, $N_{min}$ = 4. When fewer than four calibrants are used, there is not enough information to saturate the regression matrix and the quality of the standardising fits diminishes.

There are numerous variations upon the scheme described above. For example, the training patterns may be mapped onto the <u>average</u> reference pattern from a number of repeat samplings, a procedure which would further "tighten" the mapping of data.

The standardisation routines described above offer a number of significant benefits to the field of multi-element gas sensing devices. The ability to eliminate or substantially reduce measurement-to-measurement fluctuations and sensor ageing effects in the response of a given gas sensing array permits more reliable pattern recognition and reduces the need for recalibration of the device. The ability to standardise the responses of different arrays - even those of different physical composition - results in the generation of device independent, "universal" fingerprint patterns of response. These device independent fingerprints are determined by the reference patterns employed in training. Thus there would be considerable advantage in using a single reference array for the generation of the reference patterns, since this would permit standardisation of arrays by eliminating variations in array responses caused by variations in manufacturing conditions. The reference patterns could be obtained from a designated "reference" array, or from a plurality of arrays, or even generated in software by a "virtual" array.

Table 1.

| Volume concentrations in % for solvents butanone (BT); ethyl acetate (EA); ethanol/water (EW); propanol (PR) and toluene (TO). | | | | | | | |
|---|---|---|---|---|---|---|---|
| Measurement Number | | | | | | | |
| Solvent | 1 | 2 | 3 | 4 | 5 | 6 | 7 |
| BT | 1.0 | 2.0 | 3.0 | 4.0 | 5.0 | 12.3 | 1.0 |
| EA | 1.0 | 2.0 | 3.0 | 4.0 | 5.0 | 12.6 | 1.0 |

Table 1. (continued)

| Volume concentrations in % for solvents butanone (BT); ethyl acetate (EA); ethanol/water (EW); propanol (PR) and toluene (TO). | | | | | | | |
| --- | --- | --- | --- | --- | --- | --- | --- |
| Measurement Number | | | | | | | |
| Solvent | 1 | 2 | 3 | 4 | 5 | 6 | 7 |
| EW | 1.0 | 2.0 | 3.0 | 4.0 | 5.0 | 7.4 | 1.0 |
| PR | 1.0 | 2.0 | 3.0 | 4.0 | 5.0 | 5.8 | 1.0 |
| TO | 1.0 | 1.2 | 1.5 | 1.8 | 2.0 | 3.6 | 1.0 |

**Claims**

**Claims for the following Contracting States : AT, BE, CH, DE, DK, FI, FR, GB, LI, NL, SE**

1. A method for standardising the responses of an array of gas sensors or quantities related thereto comprising the steps of:

   training a neural network to perform said standardisation;

   inputting an input pattern comprising the responses of the array or quantities related thereto to said neural networks; and

   outputting an output pattern from said neural networks, the output pattern being a standardised version of the input pattern;

   in which the training comprises a series of training steps in which a training pattern is inputted to the neural network and the output pattern is constrained as a reference pattern.

2. A method according to claim 1 in which the responses are normalised.

3. A method according to claim 1 or claim 2 in which the number of gas sensors in the array is twenty or greater.

4. A method according to any of claims 1 to 3 in which the reference patterns comprise the responses of at least one response array of gas sensors to a number of different gases.

5. A method according to any previous claim in which a constant offset is substrated from the responses of the gas sensors.

6. A method according to any previous claim in which quantities related to one or more number of the group comprising temperature; humidity; sensor age; and sensor base resistance are also inputs to the neural network.

7. A method according to any previous claim in which the responses of different arrays of gas sensors are standardised using neural networks which have been trained using a common set of reference patterns.

8. A neural network adapted to perform a method according to any of claims 1 to 7 and having:

   a plurality of input nodes into which an input pattern is inputted; and

   a plurality of output nodes from which a standardised pattern is outputted;

   wherein the neural network is previously trained to perform the standardisation.

## EP 0 909 426 B1

**Claims for the following Contracting States : ES, GR, IE, IT, LU, MC, PT**

1.  A method for standardising an input pattern comprising the steps of:

    training a neural network to perform said standardisation;

    inputting an input pattern to said neural network; and

    outputting an output pattern from said neural network, the output pattern being a standardised version of the input pattern;

    in which the training comprises a series of training steps in which a training pattern is inputted to the neural network and the output pattern is constrained as a reference pattern.

2.  A method according to claim 1 in which the input and training patterns comprise the responses of an array of gas sensors or quantities related thereto.

3.  A method according to claim 2 in which the responses are normalised .

4.  A method according to claim 2 or claim 3 in which the number of gas sensors in the array is twenty or greater.

5.  A method according to any of claims 2 to 4 in which the reference patterns comprise the responses of at least one response array of gas sensors to a number of different gases.

6.  A method according to any of claims 2 to 5 in which a constant offset is subtracted from the responses of the gas sensors.

7.  A method according to any of claims 2 to 6 in which quantities related to one or more members of the group comprising temperature; humidity; sensor age; and sensor base resistance are also inputs to the neural network.

8.  A method according to any of claims 2 to 7 in which the responses of different arrays of gas sensors are standardised using neural networks which have been trained using a common set of reference patterns.

9.  A neural network adapted to perform a method according to any of claims 1 to 8 and having:

    a plurality of input nodes into which an input pattern is inputted; and

    a plurality of output nodes from which a standardised pattern is outputted;

    wherein the neural network is previously trained to perform the standardisation.


**Patentansprüche**


**Patentansprüche für folgende Vertragsstaaten : AT, BE, CH, DE, DK, FI, FR, GB, LI, NL, SE**

1.  Verfahren zum Normieren der Antworten eines Feldes von Gassensoren oder von auf diese bezogenen Größen, welches die Schritte aufweist:

    Ausbilden eines neuronalen Netzwerks, um die Normierung durchzuführen;
    Eingeben eines Eingangsmusters enthaltend die Antworten des Feldes oder auf diese bezogene Größen in das neuronale Netzwerk; und
    Ausgeben eines Ausgangsmusters aus dem neuronalen Netzwerk, welches Ausgangsmuster eine normierte Version des Eingangsmusters ist;
    bei welchem das Ausbilden eine Reihe von Ausbildungsschritten aufweist, in welchen ein Ausbildungsmuster in das neuronale Netzwerk eingegeben wird und das Ausgangsmuster als ein Bezugsmuster erzwungen ist.

2. Verfahren nach Anspruch 1, bei welchem die Antworten normiert sind.

3. Verfahren nach Anspruch 1 oder Anspruch 2, bei welchem die Anzahl von Gassensoren in dem Feld 20 oder mehr beträgt.

4. Verfahren nach einem der Ansprüche 1 bis 3, bei welchem die Bezugsmuster die Antworten von zumindest einem Ansprechfeld von Gassensoren auf eine Anzahl unterschiedlicher Gase aufweisen.

5. Verfahren nach einem der vorhergehenden Ansprüche, bei welchem eine konstante Versetzung von den Antworten der Gassensoren subtrahiert wird.

6. Verfahren nach einem der vorhergehenden Ansprüche, bei welchem auf eines oder mehrere Glieder der Gruppe enthaltend Temperatur; Feuchtigkeit; Sensoralter; und Sensorbasiswiderstand bezogene Größen auch Eingangssignale in das neuronale Netzwerk sind.

7. Verfahren nach einem der vorhergehenden Ansprüche, bei welchem die Antworten unterschiedlicher Felder von Gassensoren normiert werden unter Verwendung von neuronalen Netzwerken, welche unter Verwendung eines gemeinsamen Satzes von Bezugsmustern ausgebildet wurden.

8. Neuronales Netzwerk, das zur Durchführung eines Verfahrens gemäß einem der Ansprüche 1 bis 7 geeignet ist und aufweist:

mehrere Eingangsknoten, in welche ein Eingangsmuster eingegeben wird; und
mehrere Ausgangsknoten, aus welchen ein normierten Muster ausgegeben wird;
worin das neuronale Netzwerk vorher ausgebildet wurde, um die Normierung durchzuführen.


**Patentansprüche für folgende Vertragsstaaten : ES, GR, IE, IT, LU, MC, PT**

1. Verfahren zum Normieren eines Eingangsmusters, welches die Schritte aufweist:

Ausbilden eines neuronalen Netzwerks, um die Normierung durchzuführen;
Eingeben eines Eingangsmusters in das neuronale Netzwerk; und
Ausgeben eines Ausgangsmusters aus dem neuronalen Netzwerk, welches Ausgangsmuster eine normierte Version des Eingangsmusters ist;
bei welchem das Ausbilden eine Reihe von Ausbildungsschritten aufweist, in welchen ein Ausbildungsmuster in das neuronale Netzwerk eingegeben wird und das Ausgangsmuster als ein Bezugsmuster erzwungen ist.

2. Verfahren nach Anspruch 1, bei welchem das Eingangs- und das Ausbildungsmuster die Antworten eines Feldes von Gassensoren oder auf diese bezogenen Größen aufweisen.

3. Verfahren nach Anspruch 2, bei welchem die Antworten normiert sind.

4. Verfahren nach Anspruch 2 oder Anspruch 3, bei welchem die Anzahl von Gassensoren in dem Feld 20 oder mehr beträgt.

5. Verfahren nach einem der Ansprüche 2 bis 4, bei welchem die Bezugsmuster die Antworten von zumindest einem Ansprechfeld von Gassensoren auf eine Anzahl unterschiedlicher Gase aufweisen.

6. Verfahren nach einem der Ansprüche 2 bis 5, bei welchem eine konstante Versetzung von den Antworten der Gassensoren subtrahiert wird.

7. Verfahren nach einem der Ansprüche 2 bis 6, bei welchem auf eines oder mehrere Glieder der Gruppe enthaltend Temperatur; Feuchtigkeit; Sensoralter; und Sensorbasiswiderstand bezogene Größen auch Eingangssignale in das neuronale Netzwerk sind.

8. Verfahren nach einem der Ansprüche 2 bis 7, bei welchem die Antworten unterschiedlicher Felder von Gassensoren normiert werden unter Verwendung von neuronalen Netzwerken, welche unter Verwendung eines gemeinsamen Satzes von Bezugsmustern ausgebildet wurden.

**9.** Neuronales Netzwerk, das zur Durchführung eines Verfahrens gemäß einem der Ansprüche 1 bis 8 geeignet ist und aufweist:

mehrere Eingangsknoten, in welche ein Eingangsmuster eingegeben wird; und
mehrere Ausgangsknoten, aus welchen ein normierten Muster ausgegeben wird;
worin das neuronale Netzwerk vorher ausgebildet wurde, um die Normierung durchzuführen.

**Revendications**

**Revendications pour les Etats contractants suivants : AT, BE, CH, DE, DK, FI, FR, GB, LI, NL, SE**

**1.** Procédé pour standardiser les réponses d'un groupement de capteurs de gaz ou des quantités qui leur sont associées, comprenant les opérations suivantes :

faire qu'un réseau neuronal procède à un apprentissage afin d'effectuer ladite standardisation ;
appliquer en entrée une configuration d'entrée comprenant les réponses du groupement, ou des quantités qui leur sont associées, audit réseau neuronal ; et
faire délivrer une configuration de sortie par ledit réseau neuronal, la configuration de sortie étant une version standardisée de la configuration d'entrée ;
où l'apprentissage comprend une série d'étapes d'apprentissage dans lesquelles une configuration d'apprentissage est appliquée en entrée au réseau neuronal et la configuration de sortie est contrainte en tant que configuration de référence.

**2.** Procédé selon la revendication 1, où les réponses sont normalisées.

**3.** Procédé selon la revendication 1 ou 2, où le nombre de capteurs de gaz du groupement est de vingt ou plus.

**4.** Procédé selon l'une quelconque des revendications 1 à 3, où les configurations de référence comprennent les réponses d'au moins un groupement de capteurs de gaz de référence à un certain nombre de gaz différents.

**5.** Procédé selon l'une quelconque des revendications précédentes, où un décalage constant est soustrait des réponses des capteurs de gaz.

**6.** Procédé selon l'une quelconque des revendications précédentes, où des quantités associées à un ou plusieurs éléments du groupe constitué par la température, l'humidité, l'âge du capteur et la résistance de base du capteur sont également appliqués en entrée au réseau neuronal.

**7.** Procédé selon l'une quelconque des revendications précédentes, où les réponses de différents groupes de capteurs de gaz sont standardisées au moyen de réseaux neuronaux qui ont fait l'objet d'un apprentissage utilisant un ensemble commun de configurations de référence.

**8.** Réseau neuronal destiné à mettre en oeuvre un procédé selon l'une quelconque des revendications 1 à 7, et comportant :

une pluralité de noeuds d'entrée auxquels une configuration d'entrée est appliquée en entrée ; et
une pluralité de noeuds de sortie, par lesquels une configuration standardisée est délivrée ;
où le réseau neuronal a préalablement fait l'objet d'un apprentissage afin d'effectuer la standardisation.

**Revendications pour les Etats contractants suivants : ES, GR, IE, IT, LU, MC, PT**

**1.** Procédé pour standardiser une configuration d'entrée, comprenant les opérations suivantes :

faire qu'un réseau neuronal procède à un apprentissage afin d'effectuer ladite standardisation ;

appliquer en entrée une configuration d'entrée audit réseau neuronal ; et

faire délivrer une configuration de sortie par ledit réseau neuronal, la configuration de sortie étant une version standardisée de la configuration d'entrée ;

où l'apprentissage comprend une série d'étapes d'apprentissage dans lesquelles une configuration d'apprentissage est appliquée en entrée au réseau neuronal et la configuration de sortie est contrainte en tant que configuration de référence.

2. Procédé selon la revendication 1, où les configurations d'entrée et d'apprentissage comprennent les réponses d'un groupement de capteurs de gaz ou des quantités qui leur sont associées.

3. Procédé selon la revendication 2, où les réponses sont normalisées.

4. Procédé selon la revendication 2 à 3, où le nombre de capteurs de gaz du groupement est de vingt ou plus.

5. Procédé selon l'une quelconque des revendications 2 à 4, où les configurations de référence comprennent les réponses d'au moins un groupement de capteurs de gaz de référence à un certains nombre de gaz différents.

6. Procédé selon l'une quelconque des revendications 2 à 5, où un décalage constant est soustrait des réponses des capteurs de gaz.

7. Procédé selon l'une quelconque des revendications 2 à 6, où des quantités associées à un ou plusieurs éléments du groupe consistant en la température, l'humidité, l'âge du capteur et la résistance de base du capteur sont appliquées en entrée au réseau neuronal.

8. Procédé selon l'une quelconque des revendications 2 à 7, où les réponses de différents groupements de capteurs de gaz sont standardisés au moyen de réseaux neuronaux qui ont fait l'objet d'un apprentissage utilisant un ensemble commun de configurations de référence.

9. Réseau neuronal destiné à mettre en oeuvre le procédé selon l'une quelconque des revendications 1 à 8, et comportant :

une pluralité de noeuds d'entrée auxquels une configuration d'entrée est appliquée en entrée ; et

une pluralité de noeuds de sortie par lesquels une configuration standardisée est délivrée ;

où le réseau neuronal a préalablement fait l'objet d'un apprentissage afin d'effectuer la standardisation.

12   10   INTERCONNECTS   18   20   14   16
(PARTIALLY
SHOWN)

20

20

FIG.1

**Figure 2.** Before mapping (solid symbols) and after mapping (open symbols) for butanone (BT, square), ethyl acetate (EA, circle), ethanol water (EW, up triangle), propanol (PR, down triangle) and toluene (TO, diamond) of sensor array A after some <u>raw data</u> of the last four solvents were used for training with the average pattern of each solvent of the same sensor array as the target.

**Figure 3.** Before mapping (solid symbols) and after mapping (open symbols) for butanone (BT, square), ethyl-acetate (EA, circle), ethanol-water (EW, up-triangle), propanol (PR, down-triangle) and toluene (TO, diamond) of sensor array A after some normalised data of the last four solvents were used for training with the average pattern of each solvent of the same sensor array as the target.

**Figure 4.** Mapped data (solid symbols) for butanone (BT, square), ethyl acetate (EA, circle), ethanol water (EW, up triangle), propanol (PR, down triangle) and toluene (TO, diamond) of sensor array $\underline{D}$ after some normalised data of solvents BT, EA, EW and TO were used for training. The targets (open symbols) are the average pattern of each solvent of the same sensor array.

**Figure 5.** Mapped data (solid symbols) for butanone (BT, square), ethyl acetate (EA, circle), ethanol water (EW, up triangle), propanol (PR, down triangle) and toluene (TO, diamond) of sensor array $\underline{B}$ after some normalised data of the last four solvents were used for training with the average pattern of each solvent of all the four sensor arrays as the target (open symbols).

**Figure 6.** Original data for sensor arrays A (open symbols) and the targets (solid symbols) of sensor array C for butanone (BT, square), ethyl acetate (EA, circle), ethanol water (EW, up triangle), propanol (PR, down triangle) and toluene (TO, diamond).

**Figure 7.** After mapping sensor array D (open symbols) towards sensor array C (solid symbols) for butanone (BT, square), ethyl acetate (EA, circle), ethanol water (EW, up triangle), propanol (PR, down triangle) and toluene (TO, diamond) after some raw data of the last four solvents were used for training.

**Figure 8.** Original data for butyl acetate (circles) and ethyl acetate (triangles). Numbers indicate dates: 1 = 24 November 1995 and 17 = 18 January 1996.

**Figure 9.** Original data of butyl acetate from 29 December to 18 January (solid circles), target (open circle) and mapped data which are all overlapped by the target. The training data set consists of the data from 29 November to 20 December with those on 24 November as the target. The numbers indicate the dates in the format of mmdd.

## Original pattern

(a)

## Netmapped pattern

(b)

**Figure 10.** Sammon maps for strawberry, apple 1, apple 2, apple 3 and lime before (a) and after processing (b) with Netmap.

**Figure 11.** Two-dimensional PCA plot with seven calibrants and P=4.

**Figure 12.** Two-dimensional PCA plot with one calibrant, six unknowns and P=3.

**Figure 13.** Two-dimensional PCA plot with two calibrants, five unknowns and P=3.

**Figure 14.** Two-dimensional PCA plot with four calibrants, three unknowns and P=3.

Figure 15. Two-dimensional PCA plot with seven calibrants and P=3.

Figure 16. Expanded portion of Figure 14 showing the mapping of three unknowns.